# EUROPEAN PATENT APPLICATION

(11) **EP 1 617 683 A1**
(43) Date of publication of application: **18.01.2006**
(21) Application number: 04727765.2
(22) Date of filing: 15.04.2004
(51) Int. Cl.: H04N 13/00

(54) **THREE-DIMENSIONALLY VIEWED IMAGE PROVIDING METHOD, AND THREE-DIMENSIONAL IMAGE DISPLAY APPARATUS**

(30) Priority: 18.04.2003 JP 2003113546; 19.09.2003 JP 2003328347
(71) Applicant: SANYO ELECTRIC CO., LTD., Moriguchi-shi, Osaka 570-8677 (JP); SHARP KABUSHIKI KAISHA, Osaka-shi, Osaka-fu 545-0013 (JP); SONY CORPORATION, Tokyo 141-0001 (JP)
(72) Inventor: MASHITANI, Ken, Neyagawa-shi, Osaka 5720839 (JP); MURATA, Haruhiko, Ibaraki-shi, Osaka 5670046 (JP); NOMURA, Toshio, Hachioji-shi, Tokyo 1930944 (JP); SHIOI, Masahiro, Chiba-shi, Chiba 2660005 (JP); SEKIZAWA, Hidehiko, Shinagawa-ku, Tokyo 1410001 (JP); SATOH, Seiji, Shinagawa-ku, Tokyo 1410001 (JP)
(74) Representative: Read, Matthew Charles
(86) International application number: PCT/JP2004/005427
(87) International publication number: WO 2004/093466

(57) **Abstract**

A transmission-side device, when transmitting as data a plurality of two-dimensional images of different viewpoints, used as stereoscopic vision-use images, transmits the data of the two-dimensional images, and in addition, viewpoint-number information allotted to each data of the two-dimensional images and viewpoint-number information as information for selecting one or more two-dimensional images, together with the data of the two-dimensional images as attached information. A transmission-side device receives the plurality of image data and the attached information, and when performing a thumb-nail display, etc., by one image out of the plurality of the image data for example, performs a process for selecting the image data from the viewpoint-number information as information for selecting the two-dimensional images.

## Description

### TECHNICAL FIELD

The present invention relates to a stereoscopic vision-use image providing method and a stereoscopic image display apparatus.

### BACKGROUND ART

As an art of performing a stereoscopic vision, there have been known various methods such as a glasses-free stereoscopic vision method using a parallax barrier, a glasses-using stereoscopic vision method using polarized glasses, liquid crystal shutter glasses, etc., and other methods Furthermore, regarding images to be viewed stereoscopically, besides a live-action image, there is an image created by a 3-D rendering, that is, a rendering process in which an object arranged in a virtual space is projected on planes by using computer graphics. In addition, by performing the rendering process in two viewpoints, it becomes possible to create a right-eye image and a left-eye image. Furthermore, there is proposed a method in which the stereoscopic vision display is performed on a receiver side by broadcasting two images as a 1-channel image (see Japanese Patent Laying-open No. H10-174064). If an image file composed of two or more images is created, it becomes possible to create a stereoscopic image when opening the file.

### SUMMARY OF THE INVENTION

However, in the above-described prior arts, it is not possible to allow a process (in addition to a stereoscopic display, a plane display, etc.,) intended on a creator side (providing side) of a stereoscopic vision-use image to be performed in a receiving-side device.

In view of the above circumstances, an object of the present invention is to provide a stereoscopic vision-use image display method, and a stereoscopic image display apparatus, capable of allowing the process intended on the creator side (providing side) of the stereoscopic vision-use image to be performed in the receiving-side device (stereoscopic image display apparatus).

A stereoscopic vision-use image providing method according to the present invention, when providing as data a plurality of two-dimensional images of different viewpoints, used as stereoscopic vision-use images, providing attached information composed of viewpoint-number information allotted to each two-dimensional image data, or information for obtaining, by an arithmetic calculation on a receiver side, viewpoint-number information in each two-dimensional image area in image data, and viewpoint-number information as information for selecting one or more two-dimensional images, together with the two-dimensional image data.

In addition, a stereoscopic vision-use image providing method according to the present invention, when providing as data a plurality of two-dimensional images of different viewpoints, used as stereoscopic vision-use images, providing attached information composed of viewpoint-number information allotted to each two-dimensional image data, or information for obtaining, by an arithmetic calculation on a receiver side, viewpoint-number information in each two-dimensional image area in image data, viewpoint-number information as information for selecting two or more two-dimensional images, and order-of-priority information indicating an order-of-priority of the selected viewpoint numbers, together with the two-dimensional image data.

Furthermore, a stereoscopic vision-use image providing method according to the present invention, when providing as data a plurality of two-dimensional images of different viewpoints, used as stereoscopic vision-use images, providing attached information composed of viewpoint-number information allotted to each two-dimensional image data, or information for obtaining, by an arithmetic calculation on a receiver side, viewpoint-number information in each two-dimensional image area in image data, and information in which the viewpoint-number information as information for selecting two or more two-dimensional images is arranged in order of priority, together with the two-dimensional image data.

In addition, a stereoscopic vision-use image providing method according to the present, when providing as data a plurality of two-dimensional images of different viewpoints, used as stereoscopic images, providing attached information composed of viewpoint-number information allotted to each two-dimensional image data, or information for obtaining, by an arithmetic calculation on a receiver side, viewpoint-number information in each two-dimensional image area in image data, viewpoint-number information as information for selecting one or more two-dimensional images; and information for indicating whether or not the plurality of two-dimensional images are an endless series of two-dimensional images, together with the two-dimensional image data.

In these stereoscopic vision-use image providing methods according to these configurations, it may be possible to provide attached information composed of display-manner information indicating in what manner the two-dimensional image data selected by the information for selecting is to be displayed as a secondary image which is not a primary stereoscopic vision-use image, together with the two-dimensional image data. In addition, it may be possible to provide attached information composed of purpose-of-use information indicating for what purposes the two-dimensional image data selected by the information for selecting is to be used, together with the two-dimensional image data. In this case, it may be possible that an alignment of bits and contents of purposes of use are corresponded, and in addition, "0", and "1" of each bit mean valid/invalid of each purpose of use.

In addition, in these stereoscopic vision-use image providing methods, it may be possible to provide attached information composed of information indicating what description formats are adopted as a description format of the information, together with the two-dimensional image data. It may be possible to provide information by any one of broadcasting, communicating, or recording into a recording medium.

Furthermore, a stereoscopic image display apparatus according to the present invention is a stereoscopic image display apparatus for creating stereoscopic vision-use images based on a plurality of two-dimensional image data of different viewpoints, and comprises a means for obtaining, from attached information attached to the two-dimensional image data, viewpoint-number information of each two-dimensional image and viewpoint-number information as information for selecting the two-dimensional images, and a means, in a case of executing a process in which it is needed to select one or a plurality of two-dimensional image data, which is not a primary stereoscopic vision-use image process, for selecting the two-dimensional image data specified by the viewpoint-number information as information for selecting the two-dimensional images.

In addition, a stereoscopic image display apparatus according to the present invention is a stereoscopic image display apparatus for creating stereoscopic vision-use images based on a plurality of two-dimensional image data of different viewpoints, and comprises a means for obtaining, from attached information attached to the two-dimensional image data, viewpoint-number information of each two-dimensional image and viewpoint-number information as information for selecting two or more two-dimensional images, and a means, in a case of executing a process in which it is needed to select the certain number of two-dimensional image data, which is not a primary stereoscopic vision-use image process, for selecting the certain number of two-dimensional image data according to an order of alignment of the viewpoint-number information as information for selecting the two-dimensional images.

In addition, a stereoscopic image display apparatus according to the present invention is a stereoscopic image display apparatus for creating stereoscopic vision-use images based on a plurality of two-dimensional image data of different viewpoints, and comprises a means for obtaining from attached information attached to the two-dimensional image data, viewpoint-number information of each two-dimensional image, viewpoint-number information as information for selecting two or more two-dimensional images, and order-of-priority information indicating an order-of-priority of the selected viewpoint numbers, and a means, in a case of executing a process in which it is needed to select the certain number of two-dimensional image data, which is not a primary stereoscopic vision-use image process, for selecting the two-dimensional image data of the certain numbers based on the viewpoint-number information as information for selecting the two-dimensional images and the order-of-priority information.

In addition, a stereoscopic image display apparatus according to the present invention is a stereoscopic image display apparatus for creating stereoscopic vision-use images based on a plurality of two-dimensional image data of different viewpoints, and comprises a means for obtaining from attached information attached to the two-dimensional image data viewpoint-number information of each two-dimensional image, viewpoint-number information as information for selecting the two-dimensional images, and display-manner information indicating in what manner the two dimensional image data selected by the information for selecting is to be displayed as a secondary image which is not a primary stereoscopic vision-use image, a means, in a case of executing a process in which it is needed to select one or a plurality of two-dimensional image data, which is not a primary stereoscopic vision-use image process, for selecting the two-dimensional image data specified by the viewpoint-number information as information for selecting the two-dimensional images; and a means for performing an image display according to the display manner based on the selected two-dimensional image data and the display manner information.

In these stereoscopic image display apparatuses, it may be possible that the process which is not a primary stereoscopic vision-use image process is a process for displaying on a screen one or a plurality of two-dimensional image data by applying thereto a reduction-in-size process in order to show contents of the plurality of two-dimensional image data of different viewpoints. Furthermore, it may be possible that the process which is not a primary stereoscopic vision-use image process is a process for selecting, out of a plurality of two-dimensional image data of different viewpoints, one or a plurality of the two-dimensional image data for use of at least one of a print-out and an image delivery.

In addition, a stereoscopic image display apparatus according to the present invention is a stereoscopic image display apparatus for creating stereoscopic vision-use images based on a plurality of two-dimensional image data of different viewpoints, and comprises a means for obtaining from attached information attached to the two-dimensional image data viewpoint-number information of each two-dimensional image, viewpoint-number information as information for selecting the two-dimensional images, and purpose-of-use information indicating for what purposes the two-dimensional image data selected by the information for selecting is to be used; and a means, in a case of executing a process corresponding to the purpose of use, for selecting the two-dimensional image data specified by the viewpoint-number information as information for selecting the two-dimensional images.

In addition, a stereoscopic image display apparatus according to the present invention is a stereoscopic image display apparatus for creating stereoscopic vision-use images based on a plurality of two-dimensional image data of different viewpoints, and comprises a means for obtaining from attached information attached to the two-dimensional image data viewpoint-number information of each two-dimensional image, and viewpoint-number information as information for selecting two or more two-dimensional images, and a means, in a case of selecting the certain number of two-dimensional image data less than the numbers of a plurality of two-dimensional image data in a primary stereoscopic vision-use image process, for selecting the certain number of two-dimensional image data based on the viewpoint-number information as information for selecting the two-dimensional images. In such the configuration, it may be possible that a stereoscopic vision-use image process is performed in such a manner that, out of the selected two-dimensional images of certain numbers, the two-dimensional image having the viewpoint-number information coincident with the viewpoint-number information as information for selecting the two-dimensional images is placed at a center of the plurality of two-dimensional images. Furthermore, a stereoscopic image display apparatus may comprise a means for obtaining, from the attached information, information indicating whether or not the plurality of two-dimensional images are an endless series of images, in which, when obtaining the information indicating that the plurality of two-dimensional images are the endless series of images, a first two-dimensional image and a last two-dimensional image in the plurality of two-dimensional images are allowed to exist in the selected two-dimensional images of certain numbers. In addition, a stereoscopic image display apparatus may comprise a means for obtaining, from the attached information, information indicating whether or not the plurality of two-dimensional images are an endless series of images, in which, when obtaining the information indicating that the plurality of two-dimensional images are not the endless series of images, in a case that a first two-dimensional image and a last two-dimensional image in the plurality of two-dimensional images exist in the selected two-dimensional image of predetermined numbers, the selected image is shifted so that the first two-dimensional image and the last two-dimensional image are eliminated so as to newly select one or more two-dimensional images.

In addition, in such the configurations, a stereoscopic image display apparatus may comprise a means for obtaining, from the attached information, information indicating what description formats as a description format of the information is adopted, in which, in a case of being capable of obtaining the information, a content of the attached information is determined based on the description format indicated in the information.

### BRIEF DESCRIPTION OF THE DRAWINGS

Figure 1 is a descriptive diagram showing a stereoscopic vision-use image providing method, and a stereoscopic image display apparatus, according to an embodiment of the present invention;
Figure 2 is a descriptive diagram showing an example of a format for a plurality of images;
Figure 3 is a descriptive diagram showing an example of a format for a plurality of images;
Figure 4 is a descriptive diagram showing an example of a format for a plurality of images; and
Figures 5A, 5B, and 5C are descriptive diagrams each of which shows a relationship between alignment values and an alignment of images of each image.

### BEST MODE FOR PRACTICING THE INVENTION

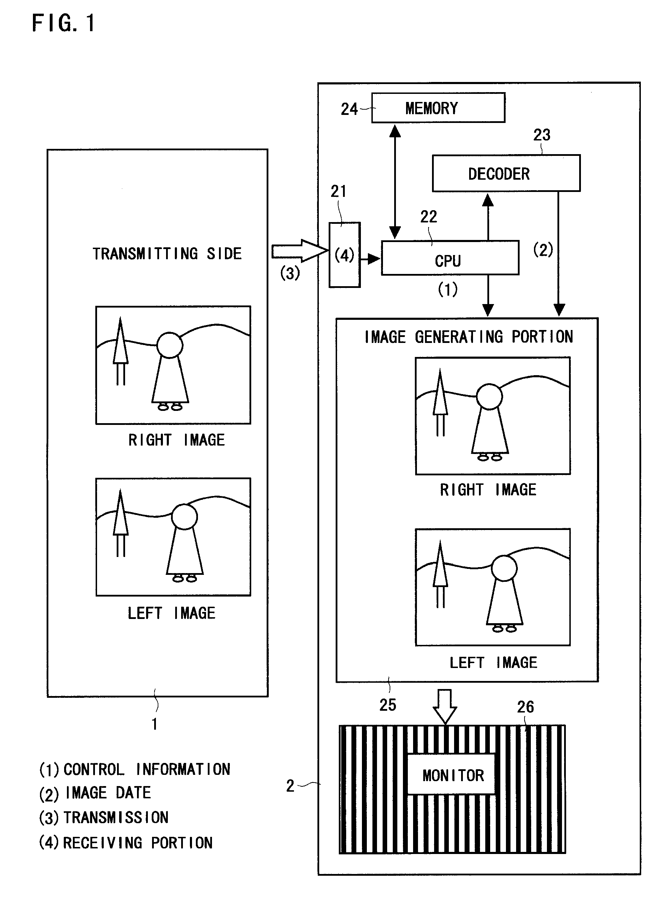

Hereinafter, a stereoscopic vision-use image providing method and a stereoscopic image display apparatus, according to the present invention, will be described based on Figures 1 to 5.

A description will be made based on Figure 1 regarding a transmission, as data, of a plurality of two-dimensional images of different viewpoints, used as stereoscopic vision-use images. It is noted that Figure 1 shows a system composed of a transmission-side device 1 configured as a broadcast station, a server on the internet, etc., and a receiving-side device 2 configured as a broadcast receiving device, a personal computer provided with an internet connection environment, a mobile telephone, etc.

It is possible to obtain the plurality of two-dimensional image data of different viewpoints by photographing an object by a plurality of cameras arranged with keeping at an eye separation distance one another, for example. Furthermore, it is also possible to obtain the two-dimensional image data of different viewpoints by setting a plurality of directions of line of vision to three-dimensional images formed of a polygon image, and projecting each two-dimensional image of these directions onto planes. Using an editing device not shown, viewpoint-number information is applied to each two-dimensional image data. The viewpoint-number information is expressed by (m,n), (m is in a range of 0 (zero) to M - (minus) 1, and n is in a range of 0 (zero) to N - (minus) 1), where horizontal-direction viewpoint numbers are M (M is a positive number of one or larger in this embodiment), and vertical-direction viewpoint numbers are N (N is a positive number of one or larger in this embodiment). However, if M is equal (=) to 1 and N is equal (=) to 1, this results in one two-dimensional image data, and thus, this case is not subject to argument in the present invention. Herein, in a case of a horizontal eight-eye vision where M is equal (=) to 8, and N is equal (=) to 1, the viewpoint-number information is applied as (0,0), (1,0), (2,0), (3,0), (4,0), (5,0), (6,0), (7,0).

The two-dimensional image data is JPEG data, for example. Each JPEG data is formed of a JPEG header, compressed image data, and End-of-image. In the JPEG header, there exists attached information such as Start-of-image, color management information, etc. It is possible that the viewpoint-number information in each two-dimensional image data exists in each JPEG header, for example. In order to gather a plurality of two-dimensional image data of different viewpoints as a set, a header covering this entire group (this header is hereinafter referred to as a file header) may be added. In this case, it is possible that the plurality of two-dimensional image data of different viewpoints consists of the file header, a plurality of JPEG data subsequent thereto, file-end information indicating an end of the entire group. In a case that the header covering the entire group does not exist (in a case of a joined image), information such as the viewpoint number, etc., is stored within the JPEG header (application marker/IFD).

In the file header, as shown below, an identifying number i, a group size s, a quantity k, a horizontal viewpoint number m, a vertical viewpoint number n, etc., are set.

**[Table 1]**

| Component | Size | valid value | unit |
|---|---|---|---|
| Identifying number i | 1 byte | 0 to 255 | |
| Group size s | 1 byte | 2 | byte |
| Quantity k | 2 byte | 1 | piece |
| Horizontal viewpoint number m | 1 byte | 0 to M-1 | |
| Vertical viewpoint number n | 1 byte | 0 to N-1 | |

The identifying number i is a description indicating types of information, and a description subsequent to the number indicates that this description is concerned with a specifying of the images. The horizontal viewpoint number m and the vertical viewpoint number n are written in 1 byte, respectively, and since 2 bytes are needed as information for specifying one image (1 group), the group size s is 2 bytes in this example. In addition, in the above example, the number of groups is one, so that the quantity k represents one piece. By using such the description, even in a case that the quantity k is variable, it is possible to calculate an entire size of the field. In the above example, the size of the entire field is calculated as 4 + (plus) s·k equal (=) to 6 where 4 is a total of sizes 1, 1, 2 of i, s, k, and s·k indicates a size of a cluster of (m, n). It is noted that when the quantity k is 0 (zero), this is defined as "there is no specified image", for example.

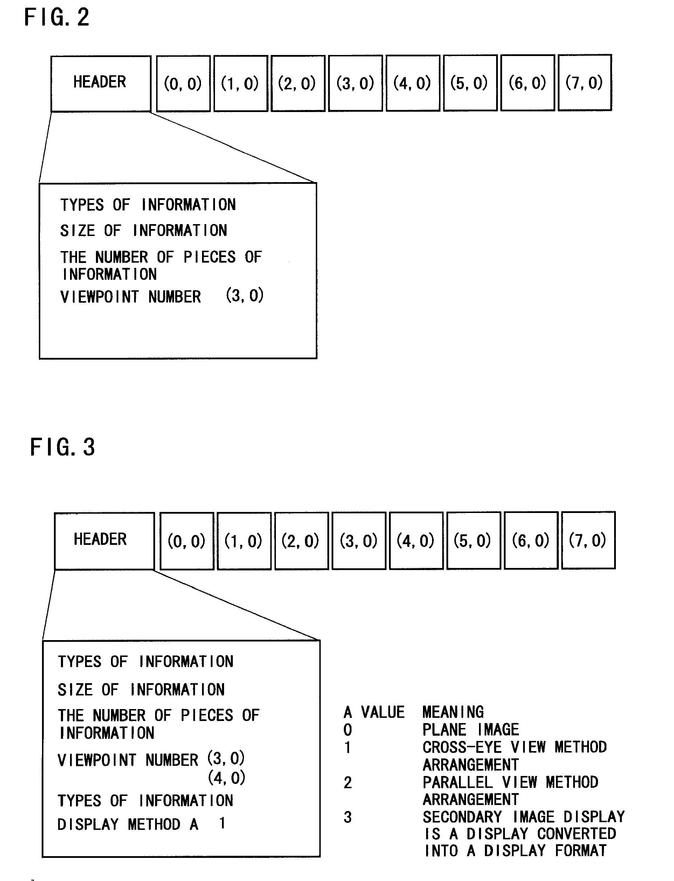

In the above example, as shown in Figure 2, as attached information within the file header, the viewpoint-number information as information for selecting one two-dimensional image is set. An example shown in Figure 2 shows a case of a horizontal eight-eye vision where M is equal (=) to 8 and N is equal (= ) to 1, and in each two-dimensional image data, the viewpoint-number information is allotted as (0,0), (1,0), (2,0), (3,0), (4,0), (5,0), (6,0), (7,0). In addition, the viewpoint-number information as information for selecting the two-dimensional image data is (3,0).

In doing so, when transmitting as data a plurality of two-dimensional images of different viewpoints, used as stereoscopic vision-use images, the attached information composed of the viewpoint-number information allotted to each two-dimensional image data and the viewpoint-number information as information for selecting the two-dimensional images one two-dimensional image, together with the two-dimensional image data, is transmitted. A set of the plurality of two-dimensional image data of different viewpoints, when being transmitted and so on, is a one-dimensional bit row, applied to a predetermined digital modulating process, and output from the transmission-side device 1. It is noted that it is possible that the plurality of two-dimensional image data are transmitted, and broadcast. In addition, the plurality of two-dimensional image data recorded into a recording medium not shown according to a format shown in Figure 2. The same is true of cases shown below.

A case that there are within the file header a plurality of the viewpoint-number information as the information for selecting the two-dimensional images will be found in below Table. Furthermore, in a below example, it is defined that in a descending order of (m0, n0), (m1, n1) ··· (mk-1, nk-1), a higher priority is given to the images. The size of the entire field is 4 + (plus) s·k equal (=) to 4 + 2·k.

**[Table 2]**

| Component | size | valid value | unit |
|---|---|---|---|
| Identifying number i | 1 byte | 0 to 255 | |
| Group size s | 1 byte | 2 | byte |
| Quantity k | 2 bytes | 0 to M · N | piece |
| Horizontal viewpoint number m0 | 1 byte | 0 to M-1 | |
| Vertical viewpoint number n0 | 1 byte | 0 to N-1 | |
| Horizontal viewpoint number m1 | 1 byte | 0 to M-1 | |
| Vertical viewpoint number n1 | 1 byte | 0 to N-1 | |
| · | | | |
| · | | | |
| Horizontal viewpoint number mk-1 | 1 byte | 0 to M-1 | |
| Vertical viewpoint number nk-1 | 1 byte | 0 to N-1 | |

In the above example, as shown in Figure 3, information in which the viewpoint-number information as information for selecting two or more two-dimensional images are arranged in order of priority is set as the attached information within the file header. In addition, in the example shown in Figure 3, the viewpoint-number information as the information for selecting the two-dimensional images are (3,0) and (4,0). In this case, (3,0) is written first, and (4,0) is written after that, which means that a first order of priority is given to (3,0), and a second order of priority is given to (4,0). By doing so, when providing as data the plurality of two-dimensional images of different viewpoints as stereoscopic vision-use images, attached information composed of the viewpoint-number information allotted to each two-dimensional image data, and the information formed by arranging in order of priority the viewpoint-number information as the information for selecting two or more two-dimensional images, together with two-dimensional image data, is to be provided.

Furthermore, in the example shown in Figure 3, a display method A is set as the attached information. In this embodiment, a display method shows displays other than an original stereoscopic vision-use display (which means a thumbnail display, an icon display, a wallpaper image display, etc., for example. These displays are referred to as secondary image displays). As shown in below Table 3, values that the display method A may take are 0, 1, 2, 3 in this embodiment. The identifying number i indicating types of information, a number indicating that "hereinafter, a display method of an image showing contents of the file is written", and the display method is written in the field.

**[Table 3]**

| Component | Size | Valid value |
|---|---|---|
| Identifying number i | 1 byte | 0 to 255 |
| Display method A | 1 byte | 0 to 3 |
| | | |

| Value a | Meaning | |
|---|---|---|
| 0 | Plane image | |
| 1 | Cross-eye view method arrangement | |
| 2 | Parallel view method arrangement | |
| 3 | Secondary image display is a display converted into a display format | |

"0" indicates that the display method is a plane image display, "1" indicates that the secondary image display is a cross-eye view method arrangement display (which is one of simple stereoscopic vision methods), "2" indicates that the secondary image display is a parallel view method arrangement display (which is one of simple stereoscopic vision methods), and "3" indicates that the secondary image display is a display converted into a display format.

In the "plane image display", one two-dimensional image data is selected (in the example shown in Figure 3, an image of viewpoint number is (3,0) of the first priority is selected), and the receiving-side device 2 is instructed from the transmitting-side device 1 to perform the image display.

In the "parallel view method arrangement display", the receiving-side device 2 is instructed from the transmitting-side device 1 to apply a size-reduction process to the image of which viewpoint number is (3,0) and the image of which viewpoint number is (4,0), to arrange the image of which viewpoint number is (3,0) on a left side, and to arrange the image of which viewpoint number is (4,0) on a right side. In the "cross-eye view method arrangement display", the receiving-side device 2 is instructed from the transmitting-side device 1 to apply a size-reduction process to the image of which viewpoint number is (3,0) and the image of which viewpoint number is (4,0), to arrange the image of which viewpoint number is (4,0) on a left side, and to arrange the image of which viewpoint number is (3,0) on a right side.

In the "display of converting into a display format", in a case that the receiving-side device 2 adopts a parallax barrier in a vertical stripe shape, for example, the receiving-side device 2 is instructed from the transmitting-side device 1 to alternately arrange one dot after another in a horizontal direction each dot of the image of which viewpoint number is (3,0) and the image of which viewpoint number is (4,0) to each of which the size-reduction process is applied.

It is noted that in the above-described order of priority setting, an order of arrangement of the viewpoint-number information indicates the order of priority. However, a priority number may be allotted to each viewpoint-number information irrespective of the arrangement of the viewpoint-number information. As in 2 (3,0), 1 (4,0), for example.

In addition, such the attached information serves as information to understand which viewpoint is a reference when selecting an image of four viewpoints from an image of a viewpoint of horizontal 8 (0 - 7) · vertical 1 (0), and stereoscopically displaying the same in a four-eye stereoscopic image display apparatus, for example, in a case that the number of images received in a display of the receiving-side device 2 is not coincident with the number of viewpoints of the display of the receiving-side device 2 (a configuration, etc., of the receiving-side device 2 will be described later).

In the file header, if the image of which horizontal viewpoint number m is "3", and vertical viewpoint number n is "0", that is, the image of which viewpoint number (3,0) is specified, images of which horizontal viewpoint numbers are (2,0), (3,0), (4,0), (5,0) may be selected in the receiving-side device 2. Herein, a specified viewpoint image is preferably arranged close to a middle (center) of the images of the four viewpoints. That is, in the receiving-side device 2, in a case that the number of viewpoints of the display is L, the specified image may be selected so that the specified image is arranged in an L/2-th place of multi-viewpoints. It is noted that in a case that the number of viewpoints is an odd number, it may be possible to determine whether to round down or up numbers of decimals of a calculation of L/2 to the nearest one. It is noted that it may be possible that there is attached information indicating which operation, that is, rounding-down or rounding-up, is to be selected in the file header.

In addition, as described above, in addition to this specifying method in which the specified viewpoint image is arranged close to the center, following specifying methods are taken into consideration.

### Example 1. All specifying

A method in which two viewpoint numbers ((2,0), (5,0), for example) are specified on a transmitting side in a case of a two-viewpoint display.

A method in which three viewpoint numbers ((1,0), (3,0), (5,0), for example) are specified on the transmitting side in a case of a three-viewpoint display.

A method in which four viewpoint numbers ((0,0), (2,0), (4,0), (6,0), for example) are specified on the transmitting side in a case of a four-viewpoint display.

Example 2 Conditional specifying 1 (a viewpoint to be always included is specified depending on each condition)

A method for specifying viewpoint numbers (2,0) and (3,0) as viewpoints to be always included in a case that the number of viewpoints of the display is an even number (other than the viewpoint number to be always included, an arbitrary viewpoint is selected).

A method for specifying the viewpoint number (3,0) as the viewpoint to be always included in a case that the number of viewpoints of the display is an odd number (other than the viewpoint number to be always included, an arbitrary viewpoint is selected).

Example 3 Conditional specifying 2 (in addition to the viewpoint to be always included, following selection conditions are specified)
① Every third image is selected in a case that the number of viewpoints of the display is less than a certain number.
② Every other image is selected in a case that the number of viewpoints of the display is equal to or more than a certain number.

If an image of which horizontal viewpoint number m is "0", and of which vertical viewpoint number n is "0", that is, an image of which viewpoint number is (0,0) is specified, it is possible to select images of which viewpoint numbers are (7,0), (0,0), (1,0), (2,0). However, in a case that it is probable that the viewpoint 7 and the viewpoint 0 are not in an endless series ("series" means that the two adjacent viewpoints are continuous), images of which viewpoint numbers are (1,0), (2,0), (3,0), (4,0) may be selected. That is, because the calculation of L/2 results in (-,0), (0,0), (1,0), (2,0), a viewpoint having no image is included. To avoid this, a shift is made to left so as to select the image of which viewpoint numbers are (1,0), (2,0), (3,0), (4,0). Generally, in an all-around image, it is probable that a first viewpoint and a last viewpoint are in an endless series.

This, too, is true of a case of displaying images are skipped-over images (an image in a case that there are intervals between the images because every other viewpoint number, or every 3rd viewpoint number, etc., is specified). For example, if the image of which horizontal viewpoint number m is "3" and of which vertical viewpoint number n is "0", that is, the image of which viewpoint number is (3,0) is specified, images of which viewpoint numbers are (1,0), (3,0), (5,0), (7,0) is selected. However, if the number of viewpoints of the image is 7 (0 to 6) · 1 (0), and in a case that the display is a four-eye type display, and the images of which viewpoint number is (3,0) is specified, the viewpoint numbers are (1,0), (3,0), (5,0), (-,0), and therefore, the fourth image does not exist. In this case, since only a selection of images of which viewpoint number are (0, 2, 4, 6) exists, the receiving-side device 2 may disregard the information for selecting the above-described images.

In a case that a plurality of images are specified, it is also possible to determine the display according to the order of priority. If the images of which viewpoint numbers are (3,0), (2,0) are specified, for example, the images of which viewpoint numbers are (1,0), (2,0), (3,0), (4,0) may be selected and displayed so that these two pieces of the images are arranged at a center.

As described above, in a case of providing as the attached information, the viewpoint-number information as the information for indicating a reference number for selecting several two-dimensional images from the plurality of two-dimensional images, together with the two-dimensional image data, the transmission-side device 1 may provide as the attached information, information showing whether or not the plurality of two-dimensional images are an endless series of images, together with the two-dimensional image data.

When the information showing the two-dimensional images are images in series (information indicating whether or not the images are the all-around images, that is, information indicating whether or not viewpoints of images of each end are in series) is provided, the receiving-side device 2 in receipt of this information is capable of determining whether it is permitted to select the above-described images of which viewpoint numbers are (7,0), (0,0), (1,0), (2,0). In a below example, in the identifying number i indicating types of information, a number indicating "hereinafter, whether or not the images of each end are in series" is written, and in a field r indicating whether the images are in series, whether or not the images are in series is written.

**[Table 4]**

| Component | Size | Valid value |
|---|---|---|
| Identifying number i | 1 byte | 0 to 255 |
| Series r | 1 byte | 0 to 1 |

| Value r | Meaning | |
|---|---|---|
| 0 | Not in series | |
| 1 | In series | |

In a case that the viewpoint (0,0) and the viewpoint (7,0) are in series (r is equal to (=) 1), the receiving-side device 2 selects the image of which viewpoint numbers are (7,0), (0,0), (1,0), (2,0). In a case that the viewpoints are not in an endless series (r is equal to (=) 0), the receiving-side device 2 does not perform the above-described selection, and as described above, carries out the process in which a shift is made to left so as to select the image of which viewpoint numbers are (1,0), (2,0), (3,0), (4,0). It is noted that in a case that the number of viewpoints in a vertical direction is more than 2, too, the value r can become the information indicating whether or not the viewpoint (0, j) and the viewpoint (7, j) are in series if the viewpoint number in a vertical direction is j.

In the above-described examples, the transmission-side device 1 is not to transmit purpose-of-use information showing for what purposes the two-dimensional image data selected by the information for selecting is to be used. The transmission-side device 1 may provide as the attached information, the purpose-of-use information showing for what purposes the two-dimensional image data selected by the information for selecting is to be used, together with the two-dimensional image data. In this case, it may be possible that an alignment of bits and contents of the purposes of use are corresponded, and "0" and "1" of each bit indicate valid/invalid of each purpose of use.

A specific example will be shown in below Table 5. Each specifying-of-purpose b has a purpose corresponded to each bit (bit 0, bit 1, ··· bit 7), and indicates whether each bit is the purpose of use or not.

**[Table 5]**

| Specifying-of-purpose b (binary digit) | 1 byte 00000000 to 11111111 |
|---|---|
| bbit0 | Image of one or more viewpoints selected from |
| | images of a plurality of viewpoints |
| bbit1 | Express contents of the file |
| bbit2 | Display plane image |
| bbit3 | Fixed image at a time of vergence adjustment |
| · | |
| · | |
| bbit6 | Reservation |
| bbit7 | Other purposes |
| | |

| Value bbit0 to bbit7 | Meaning |
|---|---|
| 0 | Not purpose of use (invalid) |
| 1 | Purpose of use (valid) |

A specific example will be shown in below Table 6. It is noted that the identifying number showing that the image selection is performed is written is tentatively 2E (00101110). In an example below, an "image of one or more viewpoints selected from images of a plurality of viewpoints" and an "image for expressing contents of the file" are the same image. Furthermore, the first priority is the image of which viewpoint number is (3, 0), and the second priority is the image of which viewpoint number is (2, 0). In addition, a "fixed image at a time of vergence adjustment" is separately specified as (2,0). Incidentally, a field expressing the same information will not usually appear for a plurality of numbers of times as in this example, and therefore, in an example shown in Table 6, a case that the identifying number indicates the "image selection" is exceptional, and the identifying number and the specifying-of-purpose are combined and indicate the types of information.

**[Table 6]**

| Component | Value |
|---|---|
| Identifying number | 00101110 (2E) |
| Specifying-of-purpose | 00000011 |
| Group size | 2 |
| Quantity | 2 |
| Horizontal viewpoint number m0 | 3 |
| Vertical viewpoint number n0 | 0 |
| Horizontal viewpoint number m1 | 2 |
| Vertical viewpoint number n1 | 0 |
| | |

| Component | Value |
|---|---|
| Identifying number | 00101110 (2E) |
| Specifying-of-purpose | 00001000 |
| Group size | 2 |
| Quantity | 1 |
| Horizontal viewpoint number m0 | 2 |
| Vertical viewpoint number n0 | 0 |

In an example shown in next Table 7, the specifying-of-purpose is commonly used among all the selected images. The other components below the group size are omitted. It is noted that in the "specifying-of-purpose" shown in Table 7, bbit7, too, is 1, and in such the case that bbit7, too, is 1, this can be defined as a specifying a selection of the image irrespective of the purposes, for example.

**[Table 7]**

| Component | Value |
|---|---|
| Identifying number | 00101110 (2E) |
| Specifying-of-purpose | 11111111 |
| · | |
| · | |

It is also possible to realize the contents of Table 6 in another description format. In an example shown in below Table 8, the specifying-of-purpose and the viewpoint number are one group, and therefore, each group has the specifying-of-purpose. The same specifying as that in Table 6 can be performed as in Table 9.

**[Table 8]**

| Component | Size | Valid value | Unit |
|---|---|---|---|
| Identifying number i | 1 byte | 0 to 255 | |
| Group size s | 1 byte | 3 | byte |
| Quantity k | 2 byte | 0 to M · N | piece |
| Horizontal viewpoint number m0 | 1 byte | 0 to M- 1 | |
| Vertical viewpoint number n0 | 1 byte | 0 to N- 1 | |
| Specifying-of-purpose b0 | 1 byte | 00000000 to 11111111 | |
| Horizontal viewpoint number m 1 | 1 byte | 0 to M- 1 | |
| Vertical viewpoint number n1 | 1 byte | 0 to N- 1 | |
| Specifying-of-purpose b1 | 1 byte | 00000000 to 11111111 | |
| . | | | |
| . | | | |
| Horizontal viewpoint number m·k-1 | 1 byte | 0 to M- 1 | |
| Vertical viewpoint number n·k-1 | 1 byte | 0 to N- 1 | |
| Specifying-of-purpose b·k-1 | 1 byte | 00000000 - 11111111 | |

**[Table 9]**

| Component | Value |
|---|---|
| Identifying number | 00101110 (2E) |
| Group size | 3 |
| Quantity | 3 |
| Horizontal viewpoint number m0 | 3 |
| Vertical viewpoint number n0 | 0 |
| Specifying-of-purpose b0 | 00000011 |
| Horizontal viewpoint number m 1 | 2 |
| Vertical viewpoint number n1 | 0 |
| Specifying-of-purpose b1 | 00000011 |
| Horizontal viewpoint number m2 | 2 |
| Vertical viewpoint number n2 | 0 |
| Specifying-of-purpose b3 | 00001000 |

In an example of Table 9, based on the descriptions of a first group and a second group, purposes of the "image of one or more viewpoints selected from images of a plurality of viewpoints" and the "image expressing contents of the file" are specified. In addition, based on the description of the first group, it is specified that the first priority image is (3,0), and based on the description of the second group, the second priority image is (2,0). Herein, since the image specified based on the "fixed image at a time of vergence adjustment", which is a description of the third group, is the same as the second priority image of which viewpoint number is (2,0) of the "image of one or more viewpoints selected from images of a plurality of viewpoints" and the "image expressing contents of the file", it may be possible to describe as shown in next Table 10.

**[Table 10]**

| Component | Value |
|---|---|
| Identifying number | 00101110 (2E) |
| Group size | 3 |
| Quantity | 2 |
| Horizontal viewpoint number m0 | 3 |
| Vertical viewpoint number n0 | 0 |
| Specifying-of-purpose b0 | 00000011 |
| Horizontal viewpoint number m1 | 2 |
| Vertical viewpoint number n1 | 0 |
| Specifying-of-purpose b1 | 00001011 |

By thus adding the specifying-of-purpose, it becomes possible for the receiving-side device 2 to understand for what intentions a writer side that adds the information has selected the image.

Although it is possible to adopt any one of descriptions shown in Table 6 or 9, or 10, in order to allow for flexibility of the selection, it may be possible to adopt a format in which there is a description c indicating which descriptions (the description according to a Table 6 format, or the description according to a Table 9 format, or the description according to a Table 10 format) to be written in the file header.

Although in the examples described above, the number of vertical viewpoints is 1, in a case that the number of vertical viewpoints is more than 2 or more, in addition to the image in a horizontal direction, the image in a vertical direction is selected. Its method of selecting is the same as that of the image in the horizontal direction.

It is noted that the images to be selected are: (1) an image close to a front side, (2) regarding an image generated by a 2D/3D (from two-dimensional to three-dimensional) conversion, a reference image, (3) an image that serves as a reference in a case of being photographed by a plurality of cameras (effective especially when there is a difference in quality between the viewpoints of cameras), and others.

### [Receiving-side device]

The receiving-side device 2 receives by a receiving portion 21 (a modem, a tuner, etc.) a set of the plurality of two-dimensional image data of different viewpoints (one-dimensional bit row information) transmitted from the transmission-side device 1. If such the data is applied to a digital modulating process, a demodulated signal is generated by a demodulation circuit not shown. In addition, when such the information is transmitted to be multiplexed with another information, a demultiplexing (DEMUX) process is performed. The received two-dimensional image data (the above-described file header, each JPEG data, the End-of-Image described above, for example) is stored into a memory 24 by a control of a CPU (central processing unit) 22. When the image is reproduced, the data read-out from the memory 24 as a result of the control of the CPU 22 is applied to a decoder 23. Image data decoded by the decoder 23 is applied to an image generating portion 25.

When performing a stereoscopic vision process, control information instructing to perform stereoscopic vision as control information is applied from the CPU 22 to the image generating portion 25. The image generating portion 25 receives a plurality of images (in Figure 1, a right-eye image and a left-eye image) from the decoder 23, and performs a generating process of a stereoscopic vision-use image. For example, when performing horizontal stereoscopic vision using a parallax barrier, the image generating portion 25 performs in each row a process for alternately arranging each dot of the right-eye image (R) and the left-eye image (L) one after another in a horizontal direction, converts into an NTSC signal image in which R-dot columns and L-dot columns are arranged one after another in a horizontal direction, for example, and applies the NTSC signals to a monitor 26. The monitor 26 performs an image display based on the received NTSC signal. Then, by providing a liquid crystal barrier on a display screen of the monitor 26, for example, it becomes possible to perform both a plane-vision image display and a stereoscopic vision image display.

If the stereoscopic vision image is the image in which each dot column of the right-eye image and the left-eye image is alternately arranged in a vertical stripe shape as described above, by a control of the CPU 22, a light-shielding area in the vertical stripe shape is formed on the above liquid crystal barrier. It is noted that in addition to the stereoscopic vision image in which each dot column of the right-eye image and the left-eye image is alternately arranged in the vertical stripe shape, a stereoscopic vision image in which each dot column of the right-eye image and the left-eye image is diagonally arranged may be adopted, for example (see Japanese Patent Laying-open No.3096613). In this case, a diagonal barrier is formed by the liquid crystal barrier. Needless to say, in addition to such a glasses-free stereoscopic method, it may be possible to adopt a stereoscopic image display apparatus such as a glasses-using stereoscopic vision method, etc.

The CPU 22 of the receiving-side device 2 allows the image generating portion 25 to execute an image generating process based on the attached information described above. Hereinafter, a description will be made regarding this image generating process.
(1) The CPU 22 obtains, from the attached information attached to the two dimensional image data, the viewpoint-number information allotted to each two-dimensional image data, and the viewpoint-number information as the information for selecting the two-dimensional image. For example, the CPU 22 obtains the viewpoint-number information (m, n) by each data from the JPEG header of the JPEG data as the two-dimensional image data, and in addition, obtains the viewpoint-number information (m, n) as the information for selecting the two-dimensional image from the file header.
   Next, the CPU 22, when it is required of a process in which it is needed to select one or a plurality of two-dimensional image data other than in a primary stereoscopic vision-use image process, selects the two-dimensional image data specified by the viewpoint-number information as the information for selecting. That is, the CPU 22 applies a reading-out address to the memory 24 in order to read out the two-dimensional image data specified by the viewpoint-number information as the information for selecting, obtains the selected two-dimensional image data, and applies the same to the decoder 23, and applies to the image generating portion 25 the control information corresponding to the required process.
   The above-described required process includes a thumbnail display in which the set of the plurality of two-dimensional image data (files) of different viewpoints are shown, an icon display, etc. The contents of the purpose shown as the example of transmitting the purposes of use, too, are contents of the process uniquely required in the receiving-side device 2. In addition, the required process includes a process in which one two-dimensional image data out of the set of the plurality of two-dimensional image data of different viewpoints is rendered a wallpaper image, a process in which the image data is used as an image to be printed-out, a process in which the image data is to be transmitted (an electronic mail transmission, etc., for example), and other processes.
   The CPU 22 feeds to the image generating portion 25 control information showing each process. The image generating portion 25, in a case of a process in which the image is used as the wallpaper image, applies processes (a pixel interpolation, a pixel sub-sampling, etc.) to the image data supplied from the decoder 23 so that a size of the image corresponds to a screen size of the monitor 26, and feeds the image data to the monitor 26. The image generating portion 25, in a case of a process in which the image data is used as an image to be printed-out, applies processes to the image data supplied from the decoder 23 so that a size of the image corresponds to an output image size, and feeds the image data to a printer (not shown). The printer and a receiver-side image display may be connected by a predetermined interface (a USB interface, IEEE1394, etc., for example). In addition, the image generating portion 25, in a case of the process that the image data is to be transmitted, applies processes to the image data supplied from the decoder 23 so that the image corresponds to an output image size, and feeds the image data to an image transmission processing portion (not shown).
(2) In a case that the contents of the file header are the description shown in Table 2, for example, the CPU 22 determines an order of priority of the images specified in each group based on an order of alignment of the group. In addition, in a case that the contents of the file header are the description in which order-of-priority information indicating the order of priority besides the order of alignment is given to each image, the CPU 22 determines the order of priority of the images based on the order-of-priority information.
(3) The CPU 22 obtains a display method A as the attached information within the file header. A processing example that corresponds to the example shown in Table 3 will be described below. The CPU 22, in a case that the display method A in the description within the file header is the "plane image display", selects the image of which viewpoint number is (3,0) of the first priority according to the description within the file header. That is, the CPU 22 reads out the image data from the memory 24, and feeds the same to the decoder 23. In addition, the CPU 22 feeds to the image generating portion 25 the control information indicating that the display method A in the description within the file header is the "plane image display". The image generating portion 25 develops the image received from the decoder 23 on a VRAM, for example. In a predetermined screen position of the monitor 26, the image (wallpaper, etc.,) will be displayed.
   In a case that the display method A in the description within the file header indicates the "parallel view method arrangement display", the CPU 22 selects the image of which viewpoint number is (3,0) and the image of which viewpoint number is (4,0). That is, the CPU 22 reads out the data from the memory 24, and feeds the same to the decoder 23. In addition, the CPU 22 feeds to the image generating portion 25 the control information indicating that the display method A in the description within the file header is the "parallel view method arrangement display". The image generating portion 25 applies a sub-sampling process to the image received from the decoder 23, develops a reduced image of the image of which viewpoint number is (3,0) on a predetermined position of the VRAM, for example, and develops a reduced image of the image of which viewpoint number is (4,0) on a right side of the image of which viewpoint number is (3,0). In a predetermined position of the monitor 26, the two reduced images will be displayed in such a manner as to be aligned on right and left.
   In a case that the display method A in the description within the file header indicates the "cross-eye view method arrangement display", the CPU 22 selects the image of which viewpoint number is (3,0) and the image of which viewpoint number is (4,0). That is, the CPU 22 reads out the data from the memory 24, and feeds the same to the decoder 23. In addition, the CPU 22 feeds to the image generating portion 25 the control information indicating that the display method A in the description within the file header is the "cross-eye view method arrangement display". The image generating portion 25 applies the sub-sampling process to the image received from the decoder 23, develops a reduced image of the image of which viewpoint number is (4,0) on a predetermined position of the VRAM, for example, and develops a reduced image of the image of which viewpoint number is (3,0) on the right side of the image of which viewpoint number is (3,0). In a predetermined position of the monitor 26, the two reduced images will be displayed in such a manner as to be aligned on right and left.
   In a case that the display method A in the description within the file header indicates the "secondary image display is a display converted into a display format", the CPU 22 selects the image of which viewpoint number is (3,0) and the image of which viewpoint number is (4,0). That is, the CPU 22 reads out the data from the memory 24, and feeds the same to the decoder 23. In addition, the CPU 22 feeds to the image generating portion 25 the control information indicating that the display method A in the description within the file header is the "display converted into a display format", and turns on the liquid crystal barrier on the monitor. The image generating portion 25 applies the sub-sampling process to the image received from the decoder 23, and develops on a predetermined position of the VRAM an image in which each dot of the image of which viewpoint number is (3,0) and the image of which viewpoint number is (4,0) that are reduced in size is alternately arranged one after another in a horizontal direction.
(4) The receiving-side device 2 is capable of performing a display process of an eight-viewpoint image based on eight images, for example, and in addition, based on a user's specifying, the receiving-side device 2 is also capable of performing a display process in which four-viewpoint image is selected so as to perform a four-viewpoint image display. Or, it may be probable that although the receiving-side device 2 is only capable of receiving an image of a maximum of four-viewpoints, a received image to be reproduced is the eight-viewpoint image.
   When performing a four-viewpoint stereoscopic display by the "image of one or more viewpoints selected from images of a plurality of viewpoints", for example, the CPU 22 determines which viewpoint is a reference based on the description in the file header. In addition, the CPU 22, in a case that the number of viewpoints is L, performs an arithmetic calculation process of L/2. That is, if the number of viewpoints is 4, a result of 2 is obtained. If an image of which horizontal viewpoint number m is "3", and of which vertical viewpoint number n is "0 (zero)", that is, the image of which viewpoint number is (3,0) is specified, the CPU 22 selects images of which horizontal viewpoints numbers are (2,0), (3,0), (4,0), (5,0) so that the image of which viewpoint number (3,0) is positioned in the 2nd place in alignment (as center as possible).
   Herein, when the four-viewpoint type stereoscopic display is performed, a viewable range of the image of four viewpoints exists at an appropriate distance for viewing the stereoscopic display in a horizontal direction at an eye-separation-distance pitch, for example. In addition, when an observer is positioned on a center of the monitor, the image of which viewpoint number is (3,0) is to be guided to a left eye, and the image of which viewpoint number is (4,0) is to be guided to a right eye. In a case that the number of viewpoints is an odd number, the CPU 22 performs predetermined processes such as a process for rounding down the process of L/2 to the nearest one, or a process for rounding up to the nearest one, and so forth.
(5) When an image of which horizontal viewpoint number m is "0 (zero)", and of which vertical viewpoint number n is "0 (zero)", that is, an image of which viewpoint number (0,0) is specified, the CPU 22 selects images of which viewpoint numbers are (7,0), (0,0), (1,0), (2,0). Or, the CPU 22 performs a process for shifting the viewpoint number to left so as to select images of which viewpoint numbers are (1,0), (2,0), (3,0), (4,0). That is, a result of the arithmetic calculation of L/2 is (-,0), (0,0), (1,0),(2,0), and thus, a viewpoint in which no image exists included. In order to avoid this, a left shift is made so as to select the images of which viewpoint numbers are (1,0), (2,0), (3,0), (4,0). This, too, is true of a case of showing the skipped-over image.
   When the image of which horizontal viewpoint number m is "3", and of which vertical viewpoint number n is "0 (zero)", that is, if the image of which viewpoint number (3,0) is specified, for example, the CPU 22 selects images of which viewpoint numbers are (1,0), (3,0), (5,0), (7,0). However, if the number of viewpoints of the image is 7 (0 to 6) · 1 (0), and the image of which viewpoint number (3,0) is specified in a case that the display is a four-viewpoint type display, a result of the arithmetic operation of L/2 becomes (1,0), (3,0), (5,0), (-,0), and thus, the fourth image does not exist. In this case, the only selection for the CPU 22 to make is images of which viewpoint numbers are (0,0), (2,0), (4,0), (6,0), and therefore, the CPU 22 executes the selection, and performs a process for disregarding the above information for the image selection.
   In addition, in a case that a plurality of images are specified, the CPU 22 is capable of determining the display according to the order of priority. If the images of which viewpoint numbers (3,0) and (2,0) are specified, for example, the CPU 22 performs a process for selecting the image of which viewpoint numbers are (1,0), (2,0), (3,0), (4,0) so that these two pieces of images are placed in the middle (center) of the images of the four viewpoint numbers.
(6) When there exists a description indicating that the two-dimensional images are in series within the file header, the CPU 22 processes as below. The CPU 22, in a case of detecting information indicating that the two-dimensional images are in series, selects the above-described images of which viewpoint numbers are (7,0), (0,0), (1,0), (2,0). That is, in a case that the viewpoint of (0,0) and that of (7,0) are in series (r = 1), the CPU 22 selects the image of which viewpoint numbers are (7,0), (0,0), (1,0), (2,0), and in a case that the viewpoints are not in an endless series (r = 0 (zero)), the CPU 22 does not perform the above selection, and as described above, the CPU 22 performs the process for shifting the viewpoint number to left so as to select the images of which viewpoint numbers are (1,0), (2,0), (3,0), (4,0).
(7) When there exists a description indicating the purpose of use within the file header, the CPU 22 processes as below. In a next example, it is assumed that the description within the file header is as shown in Table 6. When performing a process for selecting the images of four viewpoints from images of eight viewpoints (image of one or more viewpoints selected from images of a plurality of viewpoints), the CPU 22 detects whether or not bit b0 of the specifying-of-purpose b within the file header is "1" (valid). When valid, the CPU 22 selects the image of which viewpoint number described to be corresponded to the specifying-of-purpose b. When not valid, the CPU 22 selects the image determined by default in advance in the receiving-side device 2, for example.
   When performing a process for expressing the contents of the file (a display process such as a thumbnail display, etc.), the CPU 22 detects whether or not bit b1 of the specifying-of-purpose b within the file header is "1" (valid). When valid, the CPU 22 selects the image of which viewpoint number described to be corresponded to the specifying-of-purpose b. When not valid, the CPU 22 selects the image determined by default in advance in the receiving-side device 2, for example.
   When performing a process of the plane image display (wallpaper image display, etc.), the CPU 22 detects whether or not bit b2 of the specifying-of-purpose b within the file header is "1" (valid). When valid, the CPU 22 selects the image of which viewpoint number described to be corresponded to the specifying-of-purpose b. When not valid, the CPU 22 selects the image determined by default in advance in the receiving-side device 2, for example.
   When performing a process for allowing the image to be deviated at a time of a vergence adjustment, the CPU 22 detects whether or not bit b3 of the specifying-of-purpose b within the file header is "1" (valid). When valid, the CPU 22 selects the image of which viewpoint number described to be corresponded to the specifying-of-purpose b. When not valid, the CPU 22 selects the image determined by default in advance in the receiving-side device 2, for example.
   It is noted that a fixed-side image, when displaying the images in such a manner as to be mutually deviated to right and left in the stereoscopic display, is used as the specified image in the process allowing the image to be deviated at a time of the vergence adjustment. When each image is mutually deviated to right and left, it becomes possible to correct a converging distance of a camera, an entire image is moved back and forth. In such the process, the process becomes easy if a certain image is determined not to be deviated in position and to be fixed. The CPU 22 performs a process for adopting the specified image as the fixed image.
(8) When there exists a description c indicating which descriptions (the description according to a Table 6 format, or the description according to a Table 9 format, or the description according to a Table 10 format) within the file header, the CPU 22 performs a process for interpreting which descriptions (the description according to a Table 6 format, or the description according to a Table 9 format, or the description according to a Table 10 format) are used in next descriptions based on the description c.
(9) It may be configured such that a recording medium reproducing portion (a CD-ROM drive, a DVD player, etc., for example) not shown is contained in the receiving-side device 2, or is connected to the receiving-side device 2 by a predetermined interface. In addition, when a file reproduced from a recording medium is the file including the above-described plurality of two-dimensional image data, an image reproduction may be performed according to a similar process described above.

The plurality of images included in the file does not indicate only images separated within the file. The plurality of images in the file may be one piece of image composed by joining several pieces of images. That is, the plurality of two-dimensional image data may be joined according to a predetermined rule so as to become one two-dimensional image. In this case, it is possible to specify on a receiving side the two-dimensional images of each viewpoint based on the information on the image size and the number of viewpoints, so that it is possible to obtain on the receiver side the viewpoint number even if the viewpoint number is not actually allotted to each image. A specific description will be given below.

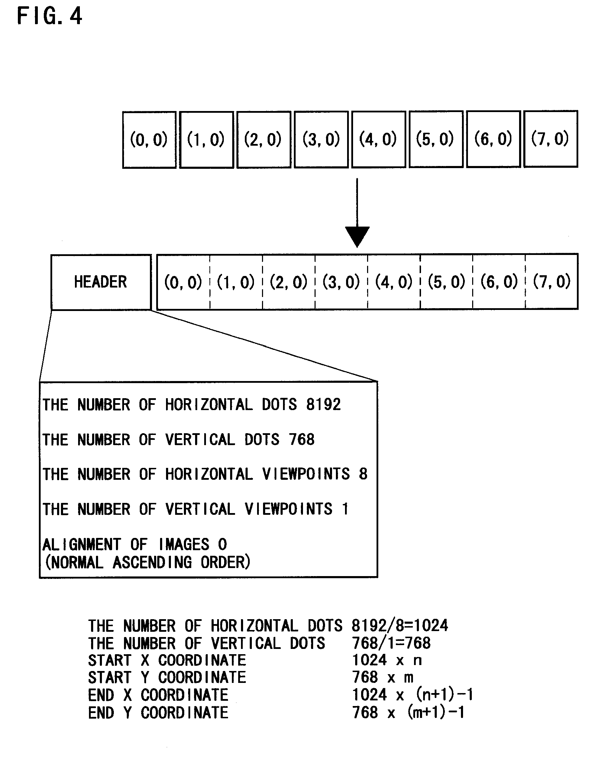

Figure 4 shows a case that there exist images worth eight images in one oblong image. That is, this image is one piece of an oblong image in which eight pieces of the images are joined. To the header of this one oblong image, the attached information such as the number of horizontal dots, the number of vertical dots, the number of horizontal viewpoints, the number of vertical viewpoints, an image alignment, etc., is added. The receiving-side device 2 does not directly receive the viewpoint numbers of each image from a transmitting side. Instead, the receiving-side device 2 cuts out each image based on the attached information, and determines a corresponding relationship between these cut-out images and the viewpoint numbers, as described below.

| | |
|---|---|
| The number of horizontal dots | 8192/8 = 1024 |
| The number of vertical dots | 768/1 = 768 |
| Start X coordinate | 1024 · q |
| Start Y coordinate | 768 · r |
| End X coordinate | 1024 · (q + 1) - 1 |
| End Y coordinate | 768 · (r + 1) - 1 |

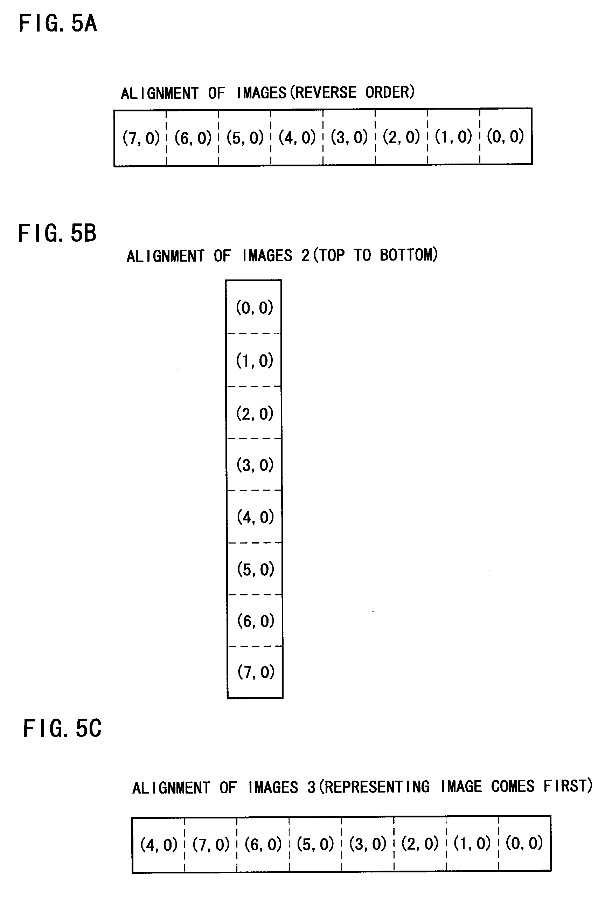

The receiving-side device 2 determines that sizes of each image are horizontal dot number 1024 times vertical dot number 768 based on the attached information. In addition, in an example shown in Figure 4, a value of the "image alignment" is "0 (zero)". "0" indicates a normal ascending order of the alignment of the images. Therefore, regarding the image of which viewpoint number is (3,0), for example, the receiving-side device 2 is capable of obtaining this image by cutting out such that q is equal (=) to 3, and r is equal (=) to 0, start X coordinate is 3072, start Y coordinate is 0 (zero), end X coordinate is 4095, and end Y coordinate is 767. It is noted that when the value of the "image alignment" is "1", the order of the alignment of the images is a reverse order as shown in Figure 5A. In this case, the receiving side determines that the viewpoint number of the image to be cut out third in the order is (5,0). In addition, that the value of the "image alignment" is "2" indicates a top-to-bottom alignment shown in Figure 5B. That the value of the "image alignment" is "3", as shown in figure 5C, indicates an alignment of (4,0), (7,0), (6,0), (5,0), (3,0), (2,0), (1,0), (0,0), and a head image is the specified image. Furthermore, the receiving-side device 2 obtains the viewpoint-number information of each cut-out image based on the value of the "image alignment" and information indicating how to cut-out images.

As described above, the present invention is capable of allowing a process intended on a producer-side device (a provider side) of the stereoscopic vision to be performed on the receiving-side device (stereoscopic image display apparatus).

## Claims

1. A stereoscopic vision-use image providing method, when providing as data a plurality of two-dimensional images of different viewpoints, used as stereoscopic vision-use images, providing attached information composed of:
viewpoint-number information allotted to each two-dimensional image data, or information for obtaining, by an arithmetic calculation on a receiver side, viewpoint-number information in each two-dimensional image area in image data; and
viewpoint-number information as information for selecting one or more two-dimensional images,
together with the two-dimensional image data.

2. A stereoscopic vision-use image providing method, when providing as data a plurality of two-dimensional images of different viewpoints, used as stereoscopic vision-use images, providing attached information composed of:
viewpoint-number information allotted to each two-dimensional image data, or information for obtaining, by an arithmetic calculation on a receiver side, viewpoint-number information in each two-dimensional image area in image data;
viewpoint-number information as information for selecting two or more two-dimensional images; and
order-of-priority information indicating an order-of-priority of the selected viewpoint numbers,
together with the two-dimensional image data.

3. A stereoscopic vision-use image providing method,
when providing as data a plurality of two-dimensional images of different viewpoints, used as stereoscopic vision-use images, providing attached information composed of:
viewpoint-number information allotted to each two-dimensional image data, or information for obtaining, by an arithmetic calculation on a receiver side, viewpoint-number information in each two-dimensional image area in image data; and
information in which the viewpoint-number information as information for selecting two or more two-dimensional images is arranged in order of priority,
together with the two-dimensional image data.

4. A stereoscopic vision-use image providing method,
when providing as data a plurality of two-dimensional images of different viewpoints, used as stereoscopic images, providing attached information composed of:
viewpoint-number information allotted to each two-dimensional image data, or information for obtaining, by an arithmetic calculation on a receiver side, viewpoint-number information in each two-dimensional image area in image data;
viewpoint-number information as information for selecting one or more two-dimensional images; and
information for indicating whether or not the plurality of two-dimensional images are an endless series of two-dimensional images,
together with the two-dimensional image data.

5. A stereoscopic vision-use image providing method according to any one of claims 1 to 4, providing
attached information composed of display-manner information indicating in what manner the two-dimensional image data selected by the information for selecting is to be displayed as a secondary image which is not a primary stereoscopic vision-use image,
together with the two-dimensional image data.

6. A stereoscopic vision-use image providing method according to any one of claims 1 to 5, providing
attached information composed of purpose-of-use information indicating for what purposes the two-dimensional image data selected by the information for selecting is to be used,
together with the two-dimensional image data.

7. A stereoscopic vision-use image providing method according to claim 6, wherein an alignment of bits and contents of purposes of use are corresponded, and in addition, "0", and "1" of each bit mean valid/invalid of each purpose of use.

8. A stereoscopic vision-use image providing method according to any one of claims 1 to 7, providing
attached information composed of information indicating what description formats are adopted as a description format of the information,
together with the two-dimensional image data.

9. A stereoscopic vision-use image providing method according to any one of claims 1 to 8, wherein providing of information is performed by any one of broadcasting, communicating, or recording into a recording medium.

10. A stereoscopic image display apparatus for creating stereoscopic vision-use images based on a plurality of two-dimensional image data of different viewpoints, comprising:
a means for obtaining, from attached information attached to the two-dimensional image data, viewpoint-number information of each two-dimensional image and viewpoint-number information as information for selecting the two-dimensional images; and
a means, in a case of executing a process in which it is needed to select one or a plurality of two-dimensional image data, which is not a primary stereoscopic vision-use image process, for selecting the two-dimensional image data specified by the viewpoint-number information as information for selecting the two-dimensional images.

11. A stereoscopic image display apparatus for creating stereoscopic vision-use images based on a plurality of two-dimensional image data of different viewpoints, comprising:
a means for obtaining, from attached information attached to the two-dimensional image data, viewpoint-number information of each two-dimensional image and viewpoint-number information as information for selecting two or more two-dimensional images; and
a means, in a case of executing a process in which it is needed to select the certain number of two-dimensional image data, which is not a primary stereoscopic vision-use image process, for selecting the certain number of two-dimensional image data according to an order of alignment of the viewpoint-number information as information for selecting the two-dimensional images.

12. A stereoscopic image display apparatus for creating stereoscopic vision-use images based on a plurality of two-dimensional image data of different viewpoints, comprising:
a means for obtaining from attached information attached to the two-dimensional image data, viewpoint-number information of each two-dimensional image, viewpoint-number information as information for selecting two or more two-dimensional images, and order-of-priority information indicating an order-of-priority of the selected viewpoint numbers; and
a means, in a case of executing a process in which it is needed to select the certain number of two-dimensional image data, which is not a primary stereoscopic vision-use image process, for selecting the two-dimensional image data of the certain numbers based on the viewpoint-number information as information for selecting the two-dimensional images and the order-of-priority information.

13. A stereoscopic image display apparatus for creating stereoscopic vision-use images based on a plurality of two-dimensional image data of different viewpoints, comprising:
a means for obtaining from attached information attached to the two-dimensional image data viewpoint-number information of each two-dimensional image, viewpoint-number information as information for selecting the two-dimensional images, and display-manner information indicating in what manner the two dimensional image data selected by the information for selecting is to be displayed as a secondary image which is not a primary stereoscopic vision-use image;
a means, in a case of executing a process in which it is needed to select one or a plurality of two-dimensional image data, which is not a primary stereoscopic vision-use image process, for selecting the two-dimensional image data specified by the viewpoint-number information as information for selecting the two-dimensional images; and
a means for performing an image display according to the display manner based on the selected two-dimensional image data and the display manner information.

14. A stereoscopic image display apparatus according to any one of claims 10 to 13, wherein the process which is not a primary stereoscopic vision-use image process is a process for displaying on a screen one or a plurality of two-dimensional image data by applying thereto a reduction-in-size process in order to show contents of the plurality of two-dimensional image data of different viewpoints.

15. A stereoscopic image display apparatus according to any one of claims 10 to 13, wherein the process which is not a primary stereoscopic vision-use image process is a process for selecting, out of a plurality of two-dimensional image data of different viewpoints, one or a plurality of the two-dimensional image data for use of at least one of a print-out and an image delivery.

16. A stereoscopic image display apparatus for creating stereoscopic vision-use images based on a plurality of two-dimensional image data of different viewpoints, comprising:
a means for obtaining from attached information attached to the two-dimensional image data viewpoint-number information of each two-dimensional image, viewpoint-number information as information for selecting the two-dimensional images, and purpose-of-use information indicating for what purposes the two-dimensional image data selected by the information for selecting is to be used; and
a means, in a case of executing a process corresponding to the purpose of use, for selecting the two-dimensional image data specified by the viewpoint-number information as information for selecting the two-dimensional images.

17. A stereoscopic image display apparatus for creating stereoscopic vision-use images based on a plurality of two-dimensional image data of different viewpoints, comprising:
a means for obtaining, from attached information attached to the two-dimensional image data, viewpoint-number information of each two-dimensional image, and viewpoint-number information as information for selecting two or more two-dimensional images; and
a means, in a case of selecting the certain number of two-dimensional image data less than the numbers of said plurality of two-dimensional image data in a primary stereoscopic vision-use image process, for selecting the certain number of two-dimensional image data based on the viewpoint-number information as information for selecting the two-dimensional images.

18. A stereoscopic image display apparatus according to claim 17, wherein a stereoscopic vision-use image process is performed in such a manner that, out of the certain number of selected two-dimensional images, the two-dimensional image having the viewpoint-number information coincident with the viewpoint-number information as information for selecting the two-dimensional images is placed at a center of the plurality of two-dimensional images.

19. A stereoscopic image display apparatus according to claim 17 or 18, comprising a means for obtaining, from the attached information, information indicating whether or not the plurality of two-dimensional images are an endless series of images, wherein,
when obtaining the information indicating that the plurality of two-dimensional images are the endless series of images, a first two-dimensional image and a last two-dimensional image in the plurality of two-dimensional images are allowed to exist in the selected two-dimensional images of certain numbers.

20. A stereoscopic image display apparatus according to claim 17 or 18, comprising a means for obtaining, from the attached information, information indicating whether or not the plurality of two-dimensional images are not an endless series of images, wherein,
when obtaining the information indicating that the plurality of two-dimensional images are not the endless series of images, in a case that a first two-dimensional image and a last two-dimensional image in the plurality of two-dimensional images exist in the selected two-dimensional image of predetermined numbers, the selected image is shifted so that the first two-dimensional image or the last two-dimensional image are eliminated so as to newly select one or more two-dimensional images.

21. A stereoscopic image display apparatus according to any one of claims 10 to 20, comprising a means for obtaining, from the attached information, information indicating what description formats as a description format of the information is adopted, wherein,
in a case of being capable of obtaining the information, a content of the attached information is recognized based on the description format indicated in the information.
